# EUROPÄISCHE PATENTANMELDUNG

(11) **EP 3 608 930 A1**
(43) Veröffentlichungstag der Anmeldung: **12.02.2020**
(21) Anmeldenummer: 19188141.6
(22) Anmeldetag: 24.07.2019
(51) Int. Cl.: H01F 27/14, B01D 53/26, G08B 21/20, H01F 27/40

(54) **ERMITTLUNG DES FEUCHTEINTRAGS IN EIN TROCKNUNGSMITTEL BEI TRANSFORMATOREN**

(30) Priorität: 08.08.2018 DE 102018213341
(71) Anmelder: Siemens Aktiengesellschaft, 80333 München (DE)
(72) Erfinder: Popescu, Alexandru, 81673 München (DE)

(57) **Zusammenfassung**

Die Erfindung gibt eine Vorrichtung zur Ermittlung des Feuchteeintrags in ein Trocknungsmittel (1.1), aufweisend:
- einen Transformator (4),
- eine Luftentfeuchtungseinheit (1), in der das Trocknungsmittel (1.1) angeordnet ist,
- einem umgebungsseitigen Eingang (9) und einen transformatorseitigen Ausgang (10) in der Luftentfeuchtungseinheit (1),
- wobei in einem ersten Betriebszustand (B1) Luft aus der Umgebung durch den Eingang (9) in die Luftentfeuchtungseinheit (1) und von dort durch den Ausgang (10) in den Transformator (4) strömt und
- wobei in einem zweiten Betriebszustand (B2) Luft aus dem Transformator (4) durch den Ausgang (10) in die Luftentfeuchtungseinheit (1) und von dort durch den Eingang (9) in die Umgebung strömt,
- einen in der Luftentfeuchtungseinheit (1) nahe dem Eingang (9) und bei dem ersten Betriebszustand in Strömungsrichtung der Luft vor dem Trocknungsmittel (1.1) angeordneten ersten Feuchtesensor (F1) und
- ein mit dem ersten Feuchtesensor (F1) in Verbindung stehendes Auswertemodul (11), das ausgebildet und programmiert ist, während des ersten Betriebszustands (B1) aus dem zeitlichen Verlauf (t1-t8) der durch den ersten Feuchtesensor (F1) erfassten ersten Feuchtemesswerte den Feuchteeintrag zu ermitteln.

Ein zugehöriges Verfahren wird ebenfalls angegeben.

## Beschreibung

### Gebiet der Erfindung

Die Erfindung betrifft eine Vorrichtung und ein Verfahren zur Ermittlung des Feuchteeintrags in ein Trocknungsmittel bei einem Transformator mit einer Luftentfeuchtungseinheit, in der das Trocknungsmittel enthalten ist.

### Hintergrund der Erfindung

Beim Betrieb von Transformatoren erwärmen sich die Transformatorspulen durch die abgegebene Verlustleistung, so dass diese durch einen Kühlkreislauf abgekühlt werden müssen, um den maximalen Wirkungsgrad des Transformators zu erhalten und Beschädigungen durch Überhitzung auszuschließen. Dazu wird der Transformator mit einem Kühlsystem ausgestattet. In der Regel werden Öle oder Ester als Isolier- und Kühlmittel eingesetzt, da sie eine hohe Durchschlagsspannung besitzen, zu geringen Verlusten im Transformatorbetrieb führen und einen guten Wärmetransport gewährleisten. Dielektrische Medien, wie z.B. Wasser, können den Wirkungsgrad des Transformators beinträchtigen und ab einer bestimmten, vom Betrieb und Bauart abhängigen, Konzentration auch Durchschläge im Transformator begünstigen; diesen sogar dadurch zerstören.

Daher wird beim Bau von Transformatoren darauf geachtet, dass eine Kontamination der Kühlmittel mit Wasser ausgeschlossen wird. Ferner ist es beim Betrieb von Ölgekühlten Transformatoren notwendig zwischen der kalten und heißen Phase des Betriebs einen Luftaustausch zwischen dem Öl-Kühlmittel und der Umgebung zu ermöglichen, um Druckschwankungen durch die thermische Ausdehnung des Öls auszugleichen. Um dieses zu ermöglichen, wird eine Belüftung der Ölwanne vorgesehen, dessen Auslässe einen Luftaustausch mit der Umgebung ermöglichen. Man unterscheidet das Aus- und Einatmen des Transformators.

Erwärmt sich der Transformator so wird das Kühlmittel erhitzt und durch seine thermische Ausdehnung nimmt es mehr Volumen ein. Kühlt sich das Öl wiederum ab, nimmt es weniger Volumen ein. Diese Volumenänderungen werden durch einen Ausgleichsbehälter aufgefangen und durch Entlüftungs- und Belüftungsventile mit der Umgebung ausgeglichen.

Der Luftaustausch erfolgt über einen mit Silicagel oder einem anderen Trocknungsmittel gefüllten Behälter, der sicherstellt, dass beim Einatmen die feuchte Umgebungsluft getrocknet wird und eine Kontamination des Kühlmittels mit Wasser verhindert wird. Das Trocknungsmittel wird allerdings im Betrieb verbraucht und muss regelmäßig getauscht werden. Wird Silicagel eingesetzt lässt sich dessen Erschöpfung anhand eines Farbumschlags eines beigemischten Indiktors erkennen.

Die Erschöpfung des Trocknungsmittels lässt sich im Falle von Silicagel durch den Farbumschlag erkennen, bei anderen Trocknungsmittel wie z.B. Phosphorpentoxid ist kein Farbumschlag erkennbar. Ferner ist der Farbumschlag ein sehr grober Indikator und muss durch regelmäßige Kontrolle des Servicepersonals zuverlässig eingeschätzt werden. Ferner wird aus Sicherheitsgründen nicht die volle Trocknungsleistung einer Silicagelfüllung ausgenutzt.

Im stationären Zustand bzw. bei geringer Temperaturschwankung erfolgt zwischen der Luft im Ausdehnungsgefäß und der Außenluft kein Luftaustausch. Zu diesem Zweck ist der Luftentfeuchter mit einem Ventil ausgerüstet, das nur bei Über- bzw. Unterdruck öffnet. Dadurch werden die Zeitabstände der Wartung wesentlich verlängert.

Allerdings erfolgt bisher keine kontinuierliche Überwachung der Trocknungsleistung. Und das Silicagel wird entweder nach Einschätzung des Servicepersonals oder zu festgelegten Serviceintervallen vorbeugend gewechselt, in der Regel alle drei bis sechs Monate. Dies ist relativ teuer.

### Zusammenfassung der Erfindung

Es ist Aufgabe der Erfindung, eine Lösung anzugeben, mit der bei Transformatoren der Feuchteintrag in ein Trocknungsmittel verbessert ermittelt werden kann.

Gemäß der Erfindung wird die gestellte Aufgabe mit der Vorrichtung und dem Verfahren der unabhängigen Patentansprüche gelöst. Vorteilhafte Weiterbildungen sind in den abhängigen Ansprüchen angegeben.

Erfindungsgemäß wird die Feuchte der dem Transformator zugeführten Luft gemessen und die Trocknungsleistung des Luftentfeuchters zuverlässig vorhergesagt. Die erfindungsgemäße Lösung besteht aus Sensoren, die an geeigneten Positionen an einer Luftentfeuchtungseinheit angeordnet sind, einem elektronischen bzw. softwarebasierten Auswertemodul, das die Sensordaten ausliest, diese untereinander verknüpft und durch seine Software vorverarbeitet. Die Lösung kann zusätzlich eine Softwarekomponente aufweisen, die entweder vor Ort oder bevorzugt in einem Rechenzentrum eines Leitsystems die Daten auswertet, diese mit hinterlegten Modellen und Daten anderer Datenbanken, wie z.B. Streckeninformationen, Wetterinformationen, abgerufene Leistung und weiterer Informationen abgleicht und korreliert. Aus diesen Informationen lässt sich auf den Feuchteeintrag in die Luftentfeuchtungseinheit schließen und ein Austausch des Trocknungsmittels zu einem bestimmten Serviceintervall vorhersagen.

Bei starker Beanspruchung durch z.B. ungewöhnlich feuchtes Wetter über einen langen Zeitraum lässt sich auch die Notwendigkeit eines vorgezogenen Wartungsintervalls für einen Austausch des Silicagels erkennen und ggf. durch das Leitsystem erzwingen, um den Transformator vor Beschädigungen zu schützen und seine Lebenszeit zu erhöhen. Wird im umgekehrten Fall weniger Trocknungsleistung (= geringer Feuchteeintrag) abgerufen, lässt sich ein Austausch des Trocknungsmittels auch auf einen späteren Zeitpunkt verschieben, so dass damit eine Kostenersparnis erreicht wird.

Eine zuverlässige automatisierte Ermittlung des Feuchteeintrags in das Trocknungsmittel hat folgende Vorteile:
1. Die Trocknungsleistung des Trocknungsmittels kann vorhergesagt werden und entsprechend automatisch innerhalb der Serviceintervalle zu dem am besten passenden Zeitpunkt eingeplant werden. Dadurch lassen sich Kosten einsparen.
2. Das Trocknungsmittel wird optimal je nach wechselnden Umgebungs- und Wetterbedingungen eingesetzt, ohne die Zuverlässigkeit des Transformatorbetriebs einzuschränken.
3. Fehlinterpretationen des Servicepersonals durch eine subjektive Deutung des Farbumschlags werden vermieden.
4. Die Lebensdauer des Transformators durch frühzeitiges Erkennen einer potentiellen Kontamination kann verlängert werden.
5. Lässt sich eine Kontamination erkennen, so kann frühzeitig eine außerplanmäßige Wartung und ein Austausch des Kühlmittels eingeleitet werden, ohne dass der Transformator durch die unerkannte Kontamination geschädigt wird.

Die Erfindung beansprucht eine Vorrichtung, die aufweist:
- einen Transformator,
- eine Luftentfeuchtungseinheit, in der das Trocknungsmittel angeordnet ist,
- einen umgebungsseitigen Eingang und einen transformatorseitigen Ausgang in der Luftentfeuchtungseinheit,
- wobei in einem ersten Betriebszustand des Transformators (= "Einatmen) Luft aus der Umgebung durch den Eingang in die Luftentfeuchtungseinheit und von dort durch den Ausgang in den Transformator strömt und
- wobei in einem zweiten Betriebszustand des Transformators (= "Ausatmen") Luft aus dem Transformator durch den Ausgang in die Luftentfeuchtungseinheit und von dort durch den Eingang in die Umgebung strömt,
- einen in der Luftentfeuchtungseinheit nahe dem Eingang und bei dem ersten Betriebszustand in Strömungsrichtung der Luft vor dem Trocknungsmittel angeordneten ersten Feuchtesensor und
- ein mit dem ersten Feuchtesensor in Verbindung stehendes Auswertemodul, das ausgebildet und programmiert ist, während des ersten Betriebszustands aus dem zeitlichen Verlauf der durch den ersten Feuchtesensor erfassten ersten Feuchtemesswerte den Feuchteeintrag in das Trocknungsmittel zu ermitteln.

In einer Weiterbildung weist die Vorrichtung eine im oder am Transformator angeordnete Datensammeleinheit, eine abgesetzt angeordnete Leitstelle oder eine Cloud auf, in denen das Auswertemodul ausgebildet ist.

In einer weiteren Ausgestaltung weist die Vorrichtung auf:
- einen nahe dem Ausgang angeordneten zweiten Temperatursensor, der ausgebildet ist, die zweite Lufttemperatur in unmittelbarer Nähe des Ausgangs im Inneren der Luftentfeuchtungseinheit zu erfassen,
- wobei das Auswertemodul programmiert ist, aus dem zeitlichen Verlauf der zweiten Lufttemperatur den ersten Betriebszustand zu ermitteln.

Insbesondere kann ein Abfall der zweiten Lufttemperatur den ersten Betriebszustand definieren.

Die Vorrichtung kann des Weiteren ein mit einem Kühlmittel gefülltes Gehäuse des Transformators und eine dem Kühlmittel Wärme entziehende Kühleinheit aufweisen.

In einer weiteren Ausgestaltung kann ein zwischen der Luftentfeuchtungseinheit und dem Transformator angeordnetes Ventil ausgebildet sein, in dem ersten Betriebszustand Luft aus der Umgebung durch die Luftentfeuchtungseinheit in den Transformator und in dem zweiten Betriebszustand Luft aus dem Transformator durch die Luftentfeuchtungseinheit in die Umgebung strömen zu lassen.

In einer Weiterbildung kann durch die Stellung des Ventils der erste und zweite Betriebszustand ermittelbar sein.

Die Erfindung beansprucht auch ein automatisiertes Verfahren zur Ermittlung des Feuchteeintrags in ein Trocknungsmittel einer Luftentfeuchtungseinheit eines Transformators, wobei in einem ersten Betriebszustand des Transformators Luft aus der Umgebung durch die Luftentfeuchtungseinheit in den Transformator strömt und wobei in einem zweiten Betriebszustand des Transformators Luft aus dem Transformator durch die Luftentfeuchtungseinheit in die Umgebung strömt. Durch einen in der Luftentfeuchtungseinheit, bei dem ersten Betriebszustand in Strömungsrichtung der Luft vor dem Trocknungsmittel angeordneten ersten Feuchtesensor werden erste Feuchtemesswerte erfasst, aus deren zeitlichem Verlauf während des ersten Betriebszustands in einem Auswertemodul der Feuchteeintrag in das Trocknungsmittel ermittelt wird.

In einer Weiterbildung kann bei einem Überschreiten eines ersten Schwellwerts des Feuchteeintrags ein erstes Signal abgegeben werden, das einen erforderlichen Wechsel des Trocknungsmittels anzeigt.

Des Weiteren kann durch einen zweiten Temperatursensor eine zweite Lufttemperatur im Inneren der Luftentfeuchtungseinheit in unmittelbarer Nähe des Transformators erfasst werden und durch das Auswertemodul aus dem zeitlichen Verlauf der zweiten Lufttemperatur der erste Betriebszustand ermittelt werden.

Außerdem kann durch ein Abfallen der zweiten Lufttemperatur der erste Betriebszustand definiert werden.

Weitere Besonderheiten und Vorteile der Erfindung werden aus den nachfolgenden Erläuterungen eines Ausführungsbeispiels anhand von schematischen Zeichnungen ersichtlich.

Es zeigen:
- Fig. 1:: ein Schaubild eines Transformator-Kühlsystems und
- Fig. 2:: ein Schaubild des zeitlichen Verlaufs von Sensormesswerten.

### Detaillierte Beschreibung eines Ausführungsbeispiels

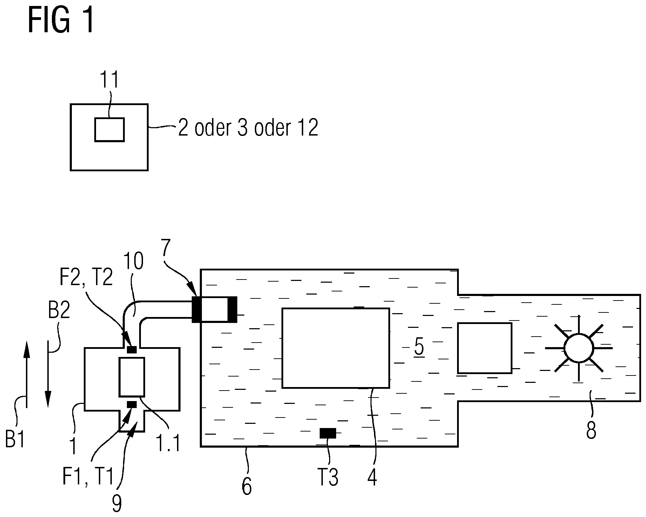

**Fig. 1** zeigt ein Schaubild einer Vorrichtung zur Erfassung des Feuchteeintrags in ein Trocknungsmittel 1.1 in einer Luftentfeuchtungseinheit 1 bei einer Kühlvorrichtung für einen Transformator 4. Der Transformator 4 weist ein Gehäuse 6 auf, in dem sich ein Kühlmittel 5, beispielsweise ein Öl, befindet. Zwischen der Luftentfeuchtungseinheit 1 und dem Transformator 4 ist ein Ventil 7 angeordnet. Durch das Ventil 7 kann Luft vom Inneren des Transformators 4 nach außen bzw. von der Umgebung in den Transformator 4 strömen. Dabei strömt die Luft durch die Luftentfeuchtungseinheit 1.

Ein erster Feuchtesensor F1 und ein erster Temperatursensor T1 sind am Eingang 9 (= umgebungsseitig), ein zweiter Feuchtesensor F2 und ein zweiter Temperatursensor T2 sind am Ausgang 10 (= transformatorseitig) der Luftentfeuchtungseinheit 1 angebracht. Die Messdaten der Sensoren F1, F2, T1, T2 werden periodisch (mindestens mit einer Abtastrate von 1 Hz) mit Hilfe eines Auswertemoduls 11 entweder direkt über eine Leitstelle 2 oder über eine Datensammeleinheit 3 mit Mikrokontroller gesammelt, ggf. gefiltert oder vorverarbeitet.

Es ist wichtig, dass die Sensormesswerte aller Sensoren F1, F2, T1, T2 gleichzeitig ausgelesen werden. Gleichzeitig bedeutet in diesem Fall, dass der Zeitunterschied zwischen dem Auslesen der einzelnen Sensoren nicht größer als 1 s betragen soll, vorzugsweise <10 ms. Ferner wird mit Hilfe eines Kühlmitteltemperatursensors T3 die Kühlmitteltemperatur ebenfalls zur gleichen Zeit wie die Sensoren F1, F2, T1 und T2 ausgelesen. Der Kühlmitteltemperatursensor T3 für die Kühlmitteltemperatur ist Stand der Technik.

Es ist unerheblich, ob die Sensoren F1 und F2 die absolute Luftfeuchte oder die relative Luftfeuchte messen, da zwischen den Größen durch die Kenntnis des Luftdrucks (ca. 1 bar) und der Temperaturen der Temperatursensoren T1 und T2 umgerechnet werden kann.

Ferner kann die Stellung des Ventils 7 (Über- oder Unterdruckventil) periodisch ausgelesen werden und mit den übrigen Sensorwerten zur gleichen Zeit in eine zentrale Datenbank des Auswertemoduls 11 abgelegt werden. Dieses kann entweder in der Datensammeleinheit 3 oder in der Leitstelle 2 erfolgen.

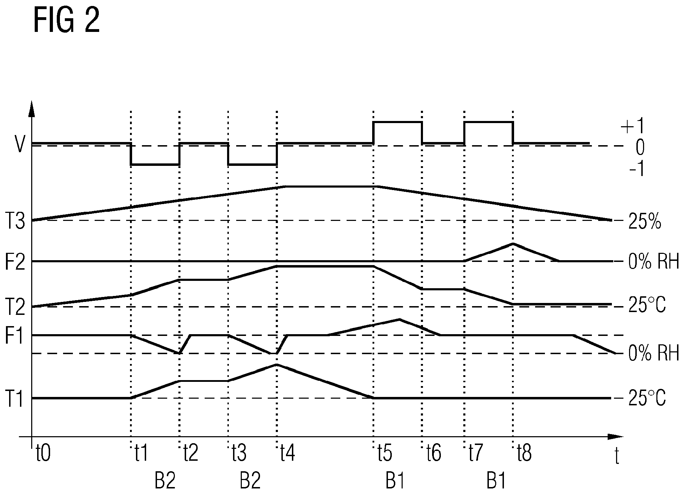

Das periodische Auslesen der Sensorwerte und die daraus erzeugten Zeitreihen der Messwerte (**Fig. 2**) enthalten wertvolle Informationen, die durch eine automatisierte Auswertung mit Hilfe des Auswertemoduls 11 eine Vorhersage des Zustandes der Luftentfeuchtungseinheit 1 und seiner Trocknungsleistung ermöglicht. Die Daten werden entweder auf der Datensammeleinheit 3 selbst ausgewertet oder auf dem zentralen Rechner der Leitstelle 2, oder aber in einer Cloud.

Der Betrieb eines gekühlten Transformators 4 kann folgende grundlegende Zustände einnehmen:
Aufheizten: Die Temperatur des Kühlmittels 5 steigt durch die Verlustleistung im Transformator 4 an. Was durch den Kühlmitteltemperatursensor T3 aufgezeichnet wird. Durch die Temperaturzunahme dehnt sich das Volumen des Kühlmittels 5 in dem Gehäuse 6 aus. Diese temperaturabhängige Volumenzunahme wird durch einen nicht dargestellten Ausgleichsbehälter aufgefangen und kann an einer Skala am Transformator 4 abgelesen werden. Ferner steigt der Luftdruck im Transformator 4 an. Um diesen Anstieg zu kompensieren, wird das Ventil 7 bei einem vorgebbaren Druck geöffnet und überschüssige Luft wird über die Luftentfeuchtungseinheit 1 nach außen abgegeben (= zweiter Betriebszustand B2). Dabei wird auch der erste Temperatursensor T1 erwärmt.
Normalbetrieb: Durch die Kühleinheit 8 wird die Verlustleistung an die Umgebungsluft abgegeben und der Transformator 4 arbeitet idealerweise bei einer konstanten Temperatur, die dem maximalen Wirkungsgrad entspricht. Eine Regelung der Kühleinheit 8 kann diesen Zustand bevorzugt einstellen. Wird die Kühleinheit 8 nicht geregelt oder der Transformator 4 sehr unterschiedlich belastet, treten Temperaturschwankungen des Kühlmittels 5 auf, die wiederum zu Volumenänderungen des Kühlmittels 5 führen können.
Abkühlen: Wird der Transformator 4 nicht mehr belastet, so kühlt er aus und das Kühlmittel 5 erfährt durch die Temperaturabnahme eine Verringerung seines Volumens, was wiederum vom Ausgleichsbehälter aufgefangen wird. Dieses kann ebenfalls an der Skala am Transformator 4 abgelesen werden. Ferner sinkt dadurch der Luftdruck im Transformator 4 und um diesen Abfall zu kompensieren wird das Ventil 7 bei einem vorgebbaren Druck geöffnet und Luft wird über die Luftentfeuchtungseinheit 1 in den Transformator 4 eingesaugt (= erster Betriebszustand B1). Dabei wird der zweite Temperatursensor T2 abgekühlt. Wird feuchte Luft eingesaugt und versagt die Luftentfeuchtungseinheit 1, kann dies über den zweiten Feuchtesensor F2 erfasst werden.

Erfindungsgemäß wird folgende Auswertung der Sensorsignale vorgenommen:
Über die Stellung des Ventils 7 lässt sich die Richtung des Luftstroms, der die Luftentfeuchtungseinheit 1 durchströmt, feststellen. Herrscht Unterdruck in der Vorrichtung und das Ventil 7 öffnet, so strömt Luft von außen durch den Eingang 9 und die Luftentfeuchtungseinheit 1 in den Transformator 4 und muss entfeuchtet werden (= erster Betriebszustand B1). Herrscht ein Überdruck, strömt trockene und erhitzte Luft über die Luftentfeuchtungseinheit 1 nach außen (= zweiter Betriebszustand B2). Im Normalbetrieb bleibt das Ventil 7 geschlossen.

Liegt die Information der Durchflussrichtung des Luftstroms durch die Stellung des Ventils 7 nicht vor, so kann aus der Auswertung der Temperatursensoren T1 und/oder T2 darauf geschlossen werden. In **Fig. 2** sind alle Sensorsignale in einem Schaubild über der Zeit t dargestellt.

Beim Ausatmen (= zweiter Betriebszustand B2) strömt der erhitzte Luftstrom aus dem Transformator 4 über den ersten und zweiten Temperatursensor T1 und T2 nach draußen und erwärmt den ersten und zweiten Temperatursensor T1 und T2 zur gleichen Zeit. Im Normalbetrieb ändert der zweite Temperatursensor T2 seine Temperatur nur sehr langsam, und korreliert mit der durch den Kühlmitteltemperatursensor T3 gemessenen Kühlmitteltemperatur. Der erste Temperatursensor T1 dagegen wird im Normalbetrieb vorwiegend von der Außentemperatur bestimmt und kühlt schnell ab, nachdem keine weitere erhitze Luft aus dem Transformator 4 nach außen strömt.

Beim Einatmen (= erster Betriebszustand B1) strömt kühle Luft zuerst an dem ersten Temperatursensor T1 vorbei, über das Trocknungsmittel 1.1 und vorbei an dem zweiten Temperatursensor T2 in den Transformator 4. Es führt zu einer gleichzeitigen Temperaturabnahme an dem ersten und zweiten Temperatursensor T1 und T2, wobei die Abnahme an dem ersten Temperatursensor T1 im Vergleich zu dem zweiten Temperatursensor T2 geringer ausfällt, da die Temperatur an dem ersten Temperatursensor T1 von vornherein durch die Außentemperatur bestimmt wird. Der zweite Temperatursensor T2 dagegen wird stärker durch das Kühlmittel 5 erhitzt und erfährt durch das Einströmen kühlerer Außenluft eine starke Temperaturabnahme.

Dieses Verhalten kann den Zuständen "Ausatmen", "Normalbetrieb" und "Einatmen" mit genügender Genauigkeit zugeordnet werden, so dass auch - ohne Kenntnis der Stellung des Ventils 7 - die Zeitpunkte t1 bis t8, die die Ventilstellungen angeben, aus den Kurven des Schaubilds der **Fig. 2** bestimmt werden können.

Die Genauigkeit der Bestimmung der Zeitpunkte t1 bis t8 kann durch Hinzuziehen der Sensorsignale der Sensoren T3, F1 und F2 noch gesteigert werden. Beim Ausatmen wird trockene Luft aus dem Transformator 4 am ersten Feuchtesensor F1 geblasen, was in einer Abnahme seines Sensorsignals aus **Fig. 2** ebenfalls zu erkennen ist. Im Normalbetrieb und beim Einatmen dominiert aber die Umgebungsfeuchte. Letztere kann erheblich schwanken, was in der **Fig. 2** zwischen den Zeitpunkten t5 und t6 dargestellt ist.

Anhand der Zeitpunkte t1 bis t8 und deren Zuordnung zu den Zuständen Ausatmen (= zweiter Betriebszustand B2), Normalbetrieb und Einatmen (= erster Betriebszustand B1) mit den Messwerten der Feuchtesensoren F1 und/oder F2 können Aussagen über den Feuchteeintrag in das Trocknungsmittel 1.1 und in den Transformator 4 getroffen werden.

Ausatmen (= zweiter Betriebszustand B2): Hier tritt kein Feuchteeintrag in den Transformator 4 auf.

Normalbetrieb: Hier tritt ebenfalls kein Feuchteeintrag in den Transformator 4 auf. Allerdings kommt es durch unterschiedliche Belastungen des Transformators 4 bei Lastspitzen zu einer zusätzlichen Erhitzung. Endet die Belastung, kühlt der Transformator 4 wieder ab. Eine geregelte Kühlung kann diesem Entgegenwirken, oder zumindest die Ausschläge dämpfen. Durch eine Erhitzung kann es zum Ausatmen kommen. Durch ein Abkühlen kann es zum Einatmen kommen. Ferner können wetterbedingt durch die Jahreszeiten oder das Klima Temperaturschwankungen auftreten, die ebenfalls zum Ein- oder Ausatmen führen können. Diese Effekte werden genauso behandelt und detektiert wie beim Aufheizen oder Abkühlen des Transformators 4. Ferner könne durch Korrelation mit Wetter- oder Streckendaten, die über die Cloud bezogen werden, diese Zuordnungen robuster verstärkt werden.

Einatmen (= erster Betriebszustand B1): Durch das Einatmen von Umgebungsluft tritt ein Feuchteeintrag in die Luftentfeuchtungseinheit 1 zwischen den Zeitpunkte t5 und t6, als auch zwischen den Zeitpunkten t7 und t8 auf. Die Dauer dieses Feuchteeintrags kann über die Differenzen "t6-t5" bzw. "t8-t7" bestimmt werden. Es kann angenommen werden, dass die durch den ersten Feuchtesensor F1 gemessene Luftfeuchte komplett durch das Trocknungsmittel 1.1 aufgenommen wird und die Gesamtmasse der aufgenommenen Feuchte mit dem Integral der Messwerte des ersten Feuchtesensors F1 zwischen den Zeitpunkten t5 und t6 bzw. zwischen t7 und t8 korreliert. Dabei kann sich die Luftfeuchte je nach Umgebungsbedingen ändern.

Werden über die Betriebsdauer des Transformators 4 alle beschriebenen Signale der Sensoren T1, T2, T3, F1 und F2 lückenlos aufgezeichnet, lässt sich die von der Luftentfeuchtungseinheit 1 aufgenommene Gesamtfeuchte abschätzen. In der Regel nimmt ein Trocknungsmittel 1.1 wie Silicagel bis zu 40 Gewichtsprozent seines Gewichts an Feuchte auf. Übersteigt die Gesamtfeuchte einen ersten Schwellwert, so ist angeraten, das Trocknungsmittel 1.1 zu tauschen, um einen sicheren Betrieb ohne Feuchteeintrag in den Transformator 4 zu gewährleisten. Dies kann durch ein erstes Signal signalisiert werden. Der Wert des ersten Schwellwerts hängt von der gewünschten Betriebsweise des Transformators 4 und anderen Umgebungsbedingungen ab. Wird ein Transformator 4 stationär in einer trockenen Umgebung betrieben, kann der Sicherheitsabstand zur Sättigung des Trocknungsmittels 1.1 geringer gewählt werden als bei einem Betrieb in einer feuchten Umgebung.

Bei Transformatoren 4 in fahrenden Zügen ist die Vorhersage ihres Einsatzortes schwieriger, kann aber mit Streckenplänen und lokalen Klimabedingungen abgeglichen werden. Allerdings sollte ein größerer Sicherheitsabstand zur vollen Beladung des Trocknungsmittels 1.1 eingehalten werden, um den sicheren Betrieb bis zum nächsten Serviceintervall sicherzustellen.

Das Ausatmen (= zweiter Betriebszustand B2), wobei erhitzte und trockene Luft durch das Trocknungsmittel 1.1 strömt, führt zu einer Desorption der Feuchte, was wiederum die Lebensdauer des Trocknungsmittels 1.1 erhöht. Allerdings sind die Zeitintervalle und der Temperaturanstieg gering, so dass dieser Effekt in erster Näherung vernachlässigbar ist, aber durch die Sensorsignale ebenfalls ausgewertet werden kann.

Zeigt das Signal des zweiten Feuchtesensors F2 während des Einatmens einen erhöhten Anstieg der Luftfeuchte im Transformator 4 an, so ist davon auszugehen, dass das Trocknungsmittel 1.1 nahezu aufgebraucht ist und schnellstmöglich ausgetauscht werden sollte, oder dass durch eventuell auftretende Undichtigkeiten feuchte Luft eindringt und das Kühlmittel 5 kontaminiert.

Wieder gibt das zeitliche Integral über die Messwerte des ersten Feuchtesensors F1 einen Anhaltspunkt über die ins Kühlmittel 5 eingebrachte Feuchte. Wird ein kritischer zweiter Schwellwert überschritten, sollte der Betrieb des Transformators 4 ausgesetzt werden, um ihn vor tiefgreifenden Beschädigungen zu schützen. Der kritische zweite Schwellwert hängt wiederum von der Bauart und dem Betrieb des Transformators 4 ab und muss genauso wie der erste Schwellwert im Vorfeld bestimmt werden.

Bei der Auswertung lässt sich die temperaturabhängige Volumenänderung des Kühlmittels 5 ausnutzen, um das verdrängte oder aufgesaugte Luftvolumen zu berechnen. Da die Geometrie des Transformators 4 und die Volumenänderung des Kühlmittels 5 bekannt sind, lässt sich das verdrängte oder hinzugekommene Luftvolumen aus der Temperaturänderung des Kühlmitteltemperatursensors T3 ableiten. Alternativ lässt sich ein zusätzlicher Füllstandsensor verwenden. Letzteres ist Stand der Technik, wird aber in der Regel in Transformatoren nicht verbaut.

Eine Korrelation der aufgenommene Zeitreihen der Sensordaten mit Daten aus der Cloud, wie z.B. Wetterinformationen, Streckenprofile und anderen Daten der Leitstelle 2 kann die Qualität der Vorhersage verbessern, ist aber nicht zwingend notwendig.

Wetterinformationen geben Aufschluss über den Luftdruck und die Umgebungsfeuchte und können zur Bestimmung der in das Trocknungsmittel 1.1 eingebrachten Feuchte, oder zur Bestimmung der Zustände Einatmen, Normalbetrieb und Ausatmen durch Korrelation mit den andren Sensoren und einem Vergleich mit bekannten im Vorfeld gemessenen Zeitreihen und Daten herangezogen werden.

Streckenprofile können bei Transformatoren 4 in Lokomotiven dazu dienen, den erwarteten Lastzustand und eine erwartete Erhitzung/Abkühlung des Transformators 4 vorauszusagen, was das Erkennen der Zustände Einatmen, Normalbetrieb und Ausatmen im Zusammenspiel mit der gemessenen Kühlmitteltemperatur erleichtert.

Weitere Daten der Leitstelle 2 geben Aufschluss über die aktuelle und zu erwartende Belastung und Erhitzung/Abkühlung des Transformators 4, was wiederum Schlüsse auf die Zustände Einatmen, Normalbetrieb und Ausatmen ermöglicht. Diese Daten und die Auswertevorschrift können entweder direkt auf der Datensammeleinheit 3 oder der Leitstelle 2 zur Verfügung stehen, oder aber alternativ über eine Internetverbindung aus einem Clouddienst bezogen werden. Die Auswertung kann auf der Datensammeleinheit 3, der Leitstelle 3 oder in der Cloud erfolgen.

Bei der Auswertung ist es für die Erfindung unerheblich, ob ein Abgleich mit Schwellwerten, Model-Fitting mit hinterlegten mathematischen Modellen, Partial Least Squares Methoden, Machine Learning oder neuronale Netze angewendet werden, da alle diese Methoden die beschriebene Funktionalität umsetzen können.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Luftentfeuchtungseinheit
- 1.1: Trocknungsmittel
- 2: Leitstelle
- 3: Datensammeleinheit
- 4: Transformator
- 5: Kühlmittel
- 6: Gehäuse
- 7: Ventil
- 8: Kühleinheit
- 9: Eingang
- 10: Ausgang
- 11: Auswertemodul
- 12: Cloud

- B1: erster Betriebszustand (Einatmen)
- B2: zweiter Betriebszustand (Ausatmen)
- F1: erster Feuchtesensor
- F2: zweiter Feuchtesensor
- T1: erster Temperatursensor
- T2: zweiter Temperatursensor
- T3: Kühlmitteltemperatursensor
- t: Zeit
- t1- t8: Zeitpunkte

## Patentansprüche

1. Vorrichtung, aufweisend:
- einen Transformator (4),
- eine Luftentfeuchtungseinheit (1), in der das Trocknungsmittel (1.1) angeordnet ist,
- einem umgebungsseitigen Eingang (9) und einen transformatorseitigen Ausgang (10) in der Luftentfeuchtungseinheit (1),
- wobei in einem ersten Betriebszustand (B1) des Transformators (4) Luft aus der Umgebung durch den Eingang (9) in die Luftentfeuchtungseinheit (1) und von dort durch den Ausgang (10) in den Transformator (4) strömt und
- wobei in einem zweiten Betriebszustand (B2) des Transformators (4) Luft aus dem Transformator (4) durch den Ausgang (10) in die Luftentfeuchtungseinheit (1) und von dort durch den Eingang (9) in die Umgebung strömt,
**gekennzeichnet durch:**
- einen in der Luftentfeuchtungseinheit (1) nahe dem Eingang (9) und bei dem ersten Betriebszustand in Strömungsrichtung der Luft vor dem Trocknungsmittel (1.1) angeordneten ersten Feuchtesensor (F1) und
- ein mit dem ersten Feuchtesensor (F1) in Verbindung stehendes Auswertemodul (11), das ausgebildet und programmiert ist, während des ersten Betriebszustands (B1) aus dem zeitlichen Verlauf (t1-t8) der durch den ersten Feuchtesensor (F1) erfassten ersten Feuchtemesswerte den Feuchteeintrag zu ermitteln.

2. Vorrichtung nach Anspruch 1,
**gekennzeichnet durch:**
- eine im oder am Transformator (4) angeordnete Datensammeleinheit (3), eine abgesetzt angeordnete Leitstelle (2) oder eine Cloud (12), in denen das Auswertemodul (11) ausgebildet ist.

3. Vorrichtung nach Anspruch 1 oder 2,
**gekennzeichnet durch:**
- einen nahe dem Ausgang (10) angeordneten zweiten Temperatursensor (T2), der ausgebildet ist, die zweite Lufttemperatur in unmittelbarer Nähe des Ausgangs (10) im Inneren der Luftentfeuchtungseinheit (1) zu erfassen,
- wobei das Auswertemodul (11) programmiert ist, aus dem zeitlichen Verlauf (t1-t8) der zweiten Lufttemperatur den ersten Betriebszustand (B1) zu ermitteln.

4. Vorrichtung nach Anspruch 3,
**dadurch gekennzeichnet,**
**dass** ein Abfall der zweiten Lufttemperatur den ersten Betriebszustand (B1) definiert.

5. Vorrichtung nach einem der vorhergehenden Ansprüche,
**gekennzeichnet durch:**
- ein mit einem Kühlmittel (5) gefülltes Gehäuse (6) des Transformators (4).

6. Vorrichtung nach Anspruch 5,
**gekennzeichnet durch:**
- eine dem Kühlmittel (5) Wärme entziehende Kühleinheit (8).

7. Vorrichtung nach einem der vorhergehenden Ansprüche,
**gekennzeichnet durch:**
- ein zwischen der Luftentfeuchtungseinheit (1) und dem Transformator (4) angeordnetes Ventil (7), das ausgebildet ist, in dem ersten Betriebszustand (B1) Luft aus der Umgebung durch die Luftentfeuchtungseinheit (1) in den Transformator (4) und in dem zweiten Betriebszustand (B2) Luft aus dem Transformator (4) durch die Luftentfeuchtungseinheit (1) in die Umgebung strömen zu lassen.

8. Vorrichtung nach Anspruch 7,
**dadurch gekennzeichnet,**
**dass** durch die Stellung des Ventils (7) der erste und zweite Betriebszustand (B1, B2) ermittelbar sind.

9. Automatisiertes Verfahren zur Ermittlung des Feuchteeintrags in ein Trocknungsmittel (1.1) einer Luftentfeuchtungseinheit (1) eines Transformators (4),
- wobei in einem ersten Betriebszustand (B1) des Transformators (4) Luft aus der Umgebung durch die Luftentfeuchtungseinheit (1) in den Transformator (4) strömt und
- wobei in einem zweiten Betriebszustand (B2) des Transformators (4) Luft aus dem Transformator (4) durch die Luftentfeuchtungseinheit (1) in die Umgebung strömt,
**dadurch gekennzeichnet,**
**dass** durch einen in der Luftentfeuchtungseinheit (1) und bei dem ersten Betriebszustand (B1) in Strömungsrichtung der Luft vor dem Trocknungsmittel (1.1) angeordneten ersten Feuchtesensor (F1) erste Feuchtemesswerte erfasst werden, aus deren zeitlichem Verlauf (t1-t8) während des ersten Betriebszustands (B1) in einem Auswertemodul (11) der Feuchteeintrag ermittelt wird.

10. Verfahren nach Anspruch 9,
**dadurch gekennzeichnet,**
**dass** bei einem Überscheiten eines ersten Schwellwerts des Feuchteeintrags ein erstes Signal abgegeben wird, das einen erforderlichen Wechsel des Trocknungsmittels (1.1) anzeigt.

11. Verfahren nach Anspruch 9 oder 10,
**dadurch gekennzeichnet,**
**dass** durch einen zweiten Temperatursensor (T2) eine zweite Lufttemperatur im Inneren der Luftentfeuchtungseinheit (1) in unmittelbarer Nähe des Transformators (4) erfasst wird und durch das Auswertemodul (11) aus dem zeitlichen Verlauf (t1-t8) der zweiten Lufttemperatur der erste Betriebszustand (B19 ermittelt wird.

12. Verfahren nach Anspruch 11,
**dadurch gekennzeichnet,**
**dass** durch ein Abfallen der zweiten Lufttemperatur der erste Betriebszustand (B1) definiert wird.
